Europäisches Patentamt

European Patent Office

Office européen des brevets

(11) Veröffentlichungsnummer : **0 030 591**
**B1**

(12) **EUROPÄISCHE PATENTSCHRIFT**

(45) Veröffentlichungstag der Patentschrift :
08.02.84

(51) Int. Cl.³ : **G 02 B   7/26**

(21) Anmeldenummer : 80105963.5

(22) Anmeldetag : 02.10.80

(54) Koppelvorrichtung mit Druckkörpern für in Stecker gefasste Lichtleitfasern.

(30) Priorität : 18.12.79 DE 2950853

(43) Veröffentlichungstag der Anmeldung :
24.06.81 Patentblatt 81/25

(45) Bekanntmachung des Hinweises auf die Patenterteilung : 08.02.84 Patentblatt 84/06

(84) Benannte Vertragsstaaten :
FR GB IT NL

(56) Entgegenhaltungen :
FR-A- 2 338 500
GB-A- 2 007 869
GB-A- 2 040 062
GB-A- 2 045 454

(73) Patentinhaber : Philips Kommunikations Industrie AG
Thurn-und-Taxis-Strasse 10
D-8500 Nürnberg 10 (DE)

(72) Erfinder : Schmidt, Bernhard
Rehfeld 8
D-5206 Neunkirchen 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Koppelvorrichtung mit Druckkörpern für in Stecker gefaßte Lichtleitfasern

Die Erfindung betrifft eine Koppelvorrichtung für in Stecker gefaßte Lichtleitfasern gemäß dem Oberbegriff des Anspruchs 1.

Eine derartige Koppelvorrichtung für Stecker mit Lichtleitfasern (LLF) ist bereits vorgeschlagen worden. Hierbei wird eine Hülse als Klemmkörper mit individueller Klemmung für jeden der beiden Stecker verwendet. Während der Längsschlitz des Klemmkörpers im wesentlichen dazu dient, eine radiale Klemmung der Stecker zu erreichen, erfüllt der Querschlitz die Aufgabe, eine voneinander unabhängige Klemmung beider Stecker zu gestatten. Es hat sich jedoch herausgestellt, daß es u. U. zweckmäßig ist, diese individuelle Klemmung von außen beeinflussen zu können.

Der Erfindung liegt die Aufgabe zugrunde, eine Koppelvorrichtung für LLF-Stecker der eingangs geschilderten Art dahingehend zu entwickeln, daß die Klemmung der Stecker über die Drehbewegung von Schraubkappen erfolgt und diese Drehbewegung in eine hierzu senkrechte Bewegung zur Klemmung der Stecker umgesetzt wird.

Diese Aufgabe wird erfindungsgemäß durch die im kennzeichnenden Teil des Anspruchs 1 angegebenen konstruktiven Maßnahmen gelöst.

Die mit der Erfindung erzielbaren Vorteile bestehen insbesondere darin, daß die Klemmung der Stecker durch einen von außen beeinflußbaren Druck erfolgt, wobei der zunächst im wesentlichen axiale Bewegungsverlauf der Schraubkappe über Druckkörper in einen hierzu rechtwinkligen Bewegungsverlauf umgelenkt und somit auf einfache Weise ein Druck auf die Flächen des Längsschlitzes des Klemmkörpers erzeugt wird, der sich letzten Endes als radialer Druck auf die gesamte Außenfläche der Stecker verteilt.

Aus der FR-A 2 338 500 ist bereits eine Koppelvorrichtung bekannt, die ebenfalls die obige Aufgabe löst. Bei dieser Koppelvorrichtung ist ein gemeinsamer Klemmkörper für beide Stecker vorhanden, so daß das Lösen des einen Steckers auch ein Lösen des anderen Steckers mit sich bringt. Weiterhin umfassen die Druckkörper den Klemmkörper an dessen gesamten Umfang, so daß eine unmittelbare Kraftübertragung vom Druckkörper auf den Klemmkörper und damit auf die Stecker erfolgt, weshalb hohe Anzugskräfte erforderlich sind.

Vorteilhafte Ausgestaltungen des Gegenstandes des Anspruchs 1 sind den abhängigen Ansprüchen zu entnehmen.

So erweist es sich als zweckmäßig, das Gehäuse mit einem Flansch auszustatten, den man für Einbauzwecke gegebenenfalls mit entsprechenden Bohrungen versehen kann. Diesen Flansch kann man an einer Stelle auch nach innen verstärken, so daß man einen Raumteiler für die mittige Trennung der Aussparung erhält (Anspruch 2). Damit entstehen zwei voneinander getrennte Räume zur Aufnahme von Druckkörpern (Anspruch 3), die noch vorteilhafterweise durch kraftübertragende Einrichtungen zusätzlich genutzt werden können (Anspruch 4). Als Druckkörper eignen sich besonders Kugeln, deren Durchmesser kleiner als die größte Ausdehnung in der Höhe der Aussparung ist (Anspruch 5), oder aber auch Druckkörper mit trapezförmigen bzw. dreieckigen Querschnitten (Anspruch 6). Hierdurch wird vorteilhafterweise eine formschlüssige Verbindung der Druckkörper untereinander erreicht. Was nun den Längsschlitz des Klemmkörpers betrifft, so kann dieser mittig zur Bohrung für die Stecker verlaufen, was bei den kleineren Steckerstiftabmessungen als ausreichend anzusehen ist (Anspruch 7). Bei größeren Steckerstiftabmessungen ist ein außermittiger Schlitz zur Bohrung des Steckers hin vorteilhaft, weil dann die fest Seite des Klemmkörpers genügend Festigkeit erhält (Anspruch 8). Es gibt nun verschiedene Möglichkeiten, das Gehäuse mit dem Klemmkörper zu verbinden. In vorteilhafter Weise geschieht dies durch Klebung oder durch eine Verschraubung der Teile miteinander (Anspruch 9). Was nun die Schraubkappen an den Enden des Gehäuses betrifft, so können diese einmal vollzylindrisch ausgebildet sein, wobei der Kappenboden lediglich eine Einführungsöffnung für die LLF enthält. Die Kappe ist mit einem Innengewinde versehen, das passend zum Außengewinde des Gehäuses ist. Um das Innere des Gehäuses abzudichten, befindet sich zwischen dem Flansch und dem offenen Ende der Schraubkappe ein Dichtungsring (Anspruch 10). Es ist aber auch möglich, den zylindrischen Teil mit einem überkragenden Teil von etwa 90° zu versehen und auf der Außenfläche des Gehäuses im Bereich der Drehbewegung des überkragenden Teils der Schraubkappe Bohrungen anzubringen, in die Stifte zur Begrenzung der Drehbewegung und Unverlierbarkeit einsetzbar sind (Anspruch 11 und 12). Zur Abdichtung gegen eindringende Feuchtigkeit erweist es sich bei gesicherter Schraubkappe als vorteilhaft, einen Dichtungsring in einem Gewindefreistrich im Kappenboden einzulegen und im Einführungsbereich der Stecker den Kappenboden mit einer Ausdrehung zu versehen, in die ein Dichtungsring eingelegt wird (Anspruch 13).

Ausführungsbeispiele der Erfindung sind in der Zeichnung dargestellt und werden im folgenden näher beschrieben. Es zeigen :

Figur 1 eine Koppelvorrichtung mit Druckeinrichtungen zur Klemmung der Stecker, in Draufsicht, im Schnitt

Figur 2 einen Klemmkörper in perspektivischer Darstellung

Figur 3 den eingebauten Klemmkörper mit Druckkörpern in Vorderansicht, im Schnitt

Figur 4 einen Klemmkörper mit außermittigem Längsschlitz

Figur 5 die Koppelvorrichtung mit Druckkörpern in Trapezform

Figur 6 die Koppelvorrichtung mit Druckkörpern in Dreieckform

Figur 7 eine Schraubkappe mit überkragendem Teil in perspektivischer Darstellung

Figur 8 diese Schraubkappe im eingebauten Zustand, in Draufsicht, im Schnitt

Figur 9 verschiedene Dichtungen im eingebauten Zustand, in Draufsicht, im Schnitt

Figur 10 eine dieser Dichtungen in Vorderansicht.

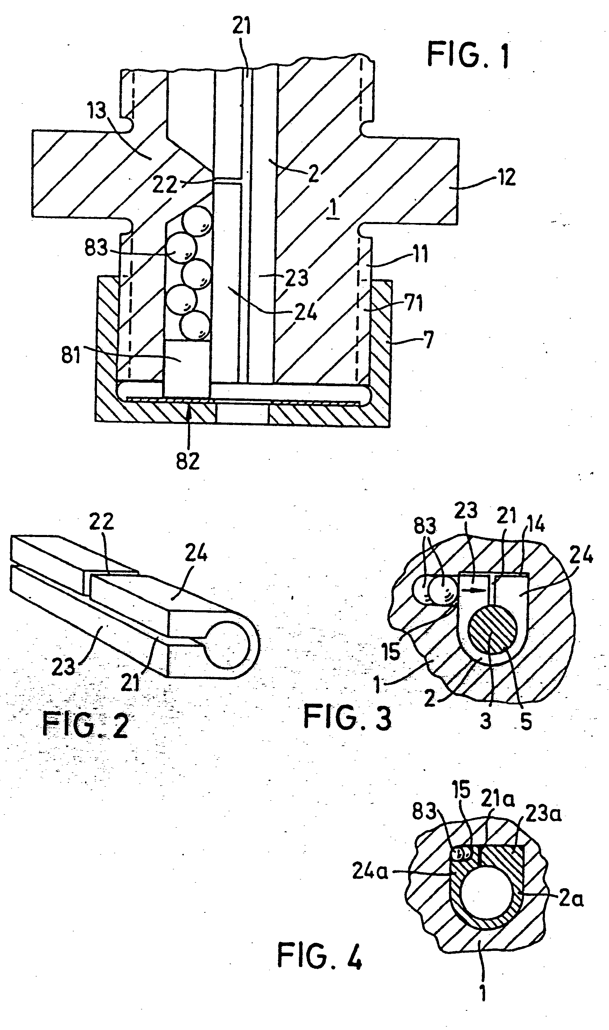

Die in den Fig. 1 bis 3 gezeigte Koppelvorrichtung enthält ein Gehäuse 1 und einen Klemmkörper 2 zur Aufnahme von LLF-Steckern. Das Gehäuse besitzt ein Außengewinde 11, das durch einen mittig angeordneten und umlaufenden Flansch 12 unterbrochen ist. In Höhe dieses Flansches ist nach innen hin an einer Stelle ein Raumteiler 13 vorgesehen. Das Gehäuse besitzt im Inneren eine Ausnehmung 14 zur Aufnahme des Klemmkörpers 2 und parallel hierzu verlaufend eine Aussparung 15 zur Aufnahme von Druckkörpern. Der Klemmkörper 2 weist einen Längsschlitz 21 und einen Querschlitz 22 auf. Der Klemmkörper 2 ist hülsenförmig gestaltet und ist an der durch den Längsschlitz 21 geteilten Stelle durch parallel verlaufende Ansätze 23 und 24 verlängert. Hierbei ist der Ansatz 24 durch den Querschlitz 22 geteilt. Die Bohrung im Klemmkörper 2 dient der Aufnahme von Steckern 5 und 6 (nicht dargestellt) zur Fassung von LLF-Enden 3 und 4 (nicht dargestellt).

Als druckerzeugende Einrichtung dient eine Schraubkappe 7, die ein zum Außengewinde des Gehäuses 1 passendes Innengewinde 71 aufweist. Kraftübertragende Einrichtungen sind ein Druckstück 81, das in die Aussparung 15 eingeführt ist und eine auf das Druckstück wirkende Druckscheibe 82 im Kappenboden. Über die Schraubbewegung der Schraubkappe erfolgt über die Druckscheibe und das Druckstück ein Druck auf Kugeln 83, die die Aufgabe haben, die im wesentlichen axiale Druckbewegung auf den Ansatz 23 umzulenken, um die erforderliche Klemmung auf die Stecker der LLF-Enden zu erreichen.

In der Fig. 4 ist ein Klemmkörper 2a dargestellt, der einen außermittigen Längsschlitz 21a aufweist. Hierdurch ergeben sich zwei unterschiedliche Ansätze 23a und 24a. Der kleinere Ansatz 24a enthält wiederum die Aussparung 15, in welcher Kugeln 83 angeordnet sind.

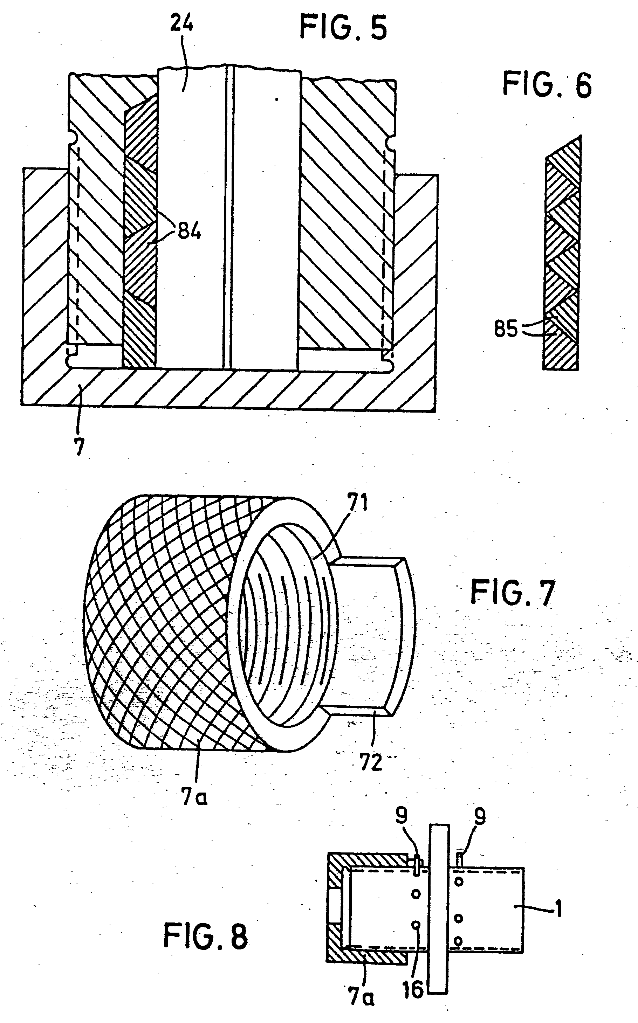

In der Fig. 5 sind Koppelvorrichtungen mit Druckkörpern mit trapezförmigem Querschnitt 84 und in der Fig. 6 mit dreieckigem Querschnitt 85 dargestellt.

Die Fig. 7 und 8 zeigen eine Ausführungsform einer Schraubkappe 7a, deren Besonderheit darin besteht, daß sie ein überkragendes Teil 72 besitzt, das etwa einen Bereich von 90° umfaßt. Dieses überkragende Teil steht in unmittelbarer Beziehung zu Stiften 9, die auf dem Gehäuse in bestimmten Abständen angebracht sind. Überkragendes Teil 72 und Stifte 9 dienen der Sicherung der Schraubkappe 7a gegen Verlieren und Überdrehen. Um die Stifte 9 im Gehäuse einsetzen zu können, sind hierzu entsprechende Bohrungen 16 auf der Außenfläche des Gehäuses vorgesehen.

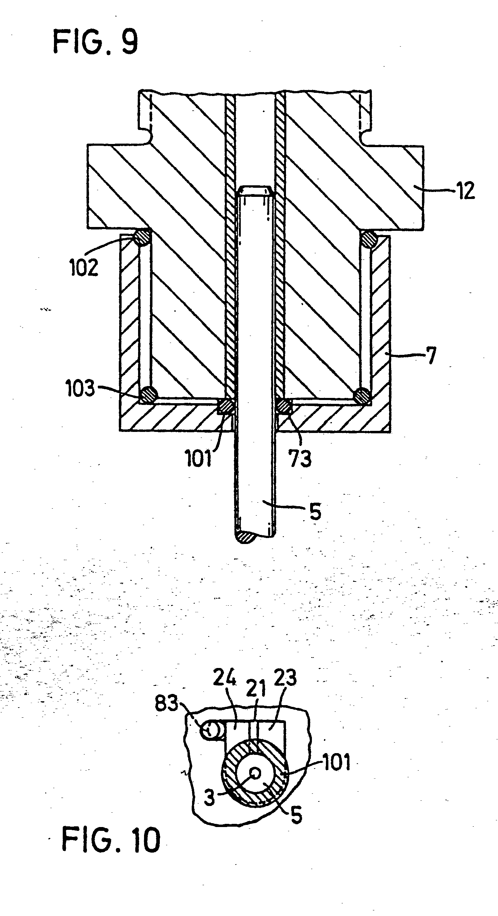

Die Fig. 9 zeigt die Normalausführung der Schraubkappe 7 mit entsprechenden Dichtungsmitteln, wie einen Dichtungsring 101, der in einer Ausdrehung 73 der Schraubkappe 7 eingelegt ist, ferner einen Dichtungsring 102, der zwischen dem Flansch 12 und dem offenen Ende der Schraubkappe 7 vorgesehen ist und einen Dichtungsring 103, der in einem Gewindefreistich im Kappenboden der Schraubkappe 7 eingelegt ist.

In der Fig. 10 ist der Dichtungsring 101 soweit dargestellt, daß er seine Funktion zur Abdichtung des Steckers 5 erkennen läßt.

## Ansprüche

1. Koppelvorrichtung für in Stecker gefaßte Lichtleitfasern, mit einem hülsenförmigen, längs- und quergeschlitzten Klemmkörper, und mit einem diesen Klemmkörper umgebenden Gehäuse, dadurch gekennzeichnet, daß der Klemmkörper (2) im Bereich des Längsschlitzes (21) mit parallel verlaufenden Ansätzen (23, 24) versehen ist, deren Abstand voneinander der Längsschlitzbreite entspricht, daß einer der Ansätze (24) durch den Querschlitz (22) geteilt ist, daß das Gehäuse (1) eine der Kontur des Klemmkörpers entsprechende durchgehende Ausnehmung (14) aufweist, die wenigstens im Bereich des geteilten Ansatzes eine in die Ausnehmung übergehende und mit der Länge der Ausnehmung übereinstimmende Aussparung (15) zur Aufnahme von Druckkörpern (83, 84, 85) besitzt, die über die Drehbewegung von an den Enden des Klemmkörpers befindlichen Schraubkappen (7, 7a) gegen den Klemmkörper preßbar sind.

2. Koppelvorrichtung nach Anspruch 1, dadurch gekennzeichnet, daß das Gehäuse (1) im mittleren Bereich außen einen umlaufenden, gegebenenfalls mit Bohrungen versehenen, Flansch (12) besitzt und innen einen Raumteiler (13) aufweist, der die Aussparung (15) mittig trennt.

3. Koppelvorrichtung nach einem der Ansprüche 1 oder 2, dadurch gekennzeichnet, daß wenigstens ein Teil der Aussparung (15) mit den Druckkörpern (83, 84, 85) verfüllt ist, die mittels kraftübertragender Einrichtungen, die zwischen den Schraubkappen (7) und den Druckkörpern angeordnet sind, gegen die eingefaßten Lichtleitfasern (3 bzw. 4) preßbar sind.

4. Koppelvorrichtung nach einem der Ansprüche 1 bis 3, dadurch gekennzeichnet, daß die kraftübertragenden Einrichtungen aus in die Einsparungen (15) ragenden Druckstücken (81) und gegebenenfalls in den Kappenböden befindlichen Druckscheiben (82) bestehen.

5. Koppelvorrichtung nach einem der Ansprüche 1 bis 4, dadurch gekennzeichnet, daß die Druckkörper Kugeln (83) sind, deren Durchmesser kleiner als die größte Ausdehnung in der Höhe der Aussparung (15) ist.

6. Koppelvorrichtung nach einem der Ansprüche 1 bis 4, dadurch gekennzeichnet, daß die Druckkörper mit trapezförmigen (84) bzw. dreieckigen (85) Querschnitten ausgebildet sind, und derart in der Aussparung (15) angeordnet sind, daß die zur Grundfläche geneigten Flächen benachbarter Druckkörper formschlüssig verbunden sind.

7. Koppelvorrichtung nach einem der Ansprüche 1 bis 6, dadurch gekennzeichnet, daß der Längsschlitz (21) des Klemmkörpers (2) mittig zur Bohrung für die Aufnahme der Lichtleitfaserstecker (5, 6) angeordnet ist.

8. Koppelvorrichtung nach einem der Ansprüche 1 bis 6, dadurch gekennzeichnet, daß der Längsschlitz (21a) des Klemmkörpers (2a) außermittig zur Bohrung für die Aufnahme der Lichtleitfaserstecker (5, 6) angeordnet ist.

9. Koppelvorrichtung nach einem der Ansprüche 1 bis 8, dadurch gekennzeichnet, daß das Gehäuse (1) und der Klemmkörper (2) durch Klebung oder Schrauben miteinander verbunden sind.

10. Koppelvorrichtung nach einem der Ansprüche 1 bis 4, dadurch gekennzeichnet, daß die Schraubkappe (7) in jeweils aus einem mit einem Innengewinde vollen Zylinder besteht, der durch einen Kappenboden abgeschlossen ist, und daß ein Dichtungsring (102) vorgesehen ist, der zwischen dem offenen Ende und dem Flansch (12) des Klemmkörpers (2) eingelegt ist.

11. Koppelvorrichtung nach einem der Ansprüche 1 bis 4, dadurch gekennzeichnet, daß die Schraubkappe (7a) jeweils als zylinderförmiges Teil mit zum Außengewinde (11) des Gehäuses (1) passenden Innengewinde (71) ausgebildet ist, daß das zylinderförmige Teil mit einem Kappenboden abgeschlossen ist, und daß das zylinderförmige Teil zur Öffnung hin ein überkragendes Teil (72) von etwa 90° aufweist.

12. Koppelvorrichtung nach Anspruch 11, dadurch gekennzeichnet, daß auf der Außenfläche des Gehäuses (1) im Bereich der Drehbewegung des überkragenden Teils (72) der Schraubkappe (7a) Bohrungen (16) angebracht sind, in die Stifte (9) zur Begrenzung der Drehbewegung und Unverlierbarkeit einsetzbar sind.

13. Koppelvorrichtung nach einem der Ansprüche 11 oder 12, dadurch gekennzeichnet, daß der Kappenboden bei gesicherter Schraubkappe (7a) einerseits einen Gewindefreistich zur Aufnahme eines Dichtringes (103) aufweist und andererseits im Einführungsbereich des Steckers (5 bzw. 6) mit einer Ausdrehung zur Aufnahme eines Dichtringes (101) versehen ist.

**Claims**

1. Coupling device, for fibre-optical conductors mounted in plugs, with a sleeve-shaped, longitudinally and transversely slotted clamping body and with a housing surrounding this clamping body, characterised thereby, that the clamping body (2) is provided in the region of the longitudinal slot (21) with parallelly extending projections (23, 24), the spacing of which one from the other corresponds to the width of the longitudinal slot, that one of the projections (24) is divided by the transverse slot (22), that the housing (1) displays a continuous recess (14), which corresponds to the outline of the clamping body and which at least in the region of the divided projection possesses a cutout (15), passing over into the recess and agreeing in length with the recess, for the reception of pressure bodies (83, 84, 85), which are pressable against the clamping body through the rotary movement of screw caps (7, 7a) disposed at the ends of the clamping body.

2. Coupling device according to claim 1, characterised thereby, that the housing (1) in the middle region possesses an encircling flange (12), in a given case provided with bores, at the outside and displays a space divider (13), which divides the cutout (15) centrally, at the inside.

3. Coupling device according to one of the claims 1 or 2, characterised thereby, that at least a part of the cutout (15) is filled by the pressure bodies (83, 84, 85), which are pressable against the bound fibre-optical conductors (3 or 4) by means of force-transmitting equipments which are arranged between the screw caps (7) and the pressure bodies.

4. Coupling device according to one of the claims 1 to 3, characterised thereby, that the force-transmitting equipments consist of pressure members (81) projecting into the cutouts (15) and of pressure washers (82) in a given case disposed in the cap bottoms.

5. Coupling device according to one of the claims 1 to 4, characterised thereby, that the pressure bodies are balls (83), the diameter of which is smaller than the greatest extent of the height of the cutout (15).

6. Coupling device according to one of the claims 1 to 4, characterised thereby, that the pressure bodies are constructed with trapezoidal (84) or triangular (85) cross-sections and arranged in the cutout (15) in such a manner that the surfaces, which are inclined to the base surface, of adjacent pressure bodies are shape-lockingly connected.

7. Coupling device according to one of the claims 1 to 6, characterised thereby, that the longitudinal slot (21) of the clamping body (2) is arranged centrally to the bore for the reception of the fibre-optical conductor plug (5, 6).

8. Coupling device according to one of the claims 1 to 6, characterised thereby, that the longitudinal slot (21a) of the clamping body (2a) is arranged eccentrically to the bore for the reception of the fibre-optical conductor plug (5, 6).

9. Coupling device according to one of the claims 1 to 8, characterised thereby, that the housing (1) and the clamping body (2) are connected each with the other by adhesion or screws.

10. Coupling device according to one of the claims 1 to 4, characterised thereby, that the screw cap (7) each time consists a full cylinder with an internal thread and closed off by a cap bottom and that a sealing ring (102) is provided, which is laid in between the open end and the flange (12) of the clamping body (2).

11. Coupling device according to one of the claims 1 to 4, characterised thereby, that the screw cap (7a) is constructed each time as cylindrical part with an internal thread (71) fitting the external thread (11) of the housing (1), that the cylindrical part is closed off by a cap bottom and that the cylindrical part displays an overlapping part (72) of about 90° towards the opening.

12. Coupling device according to claim 11, characterised thereby, that bores (16), into which pins (9) are insertable for limitation of the rotary movement and for captive retention, are arranged on the external surface of the housing (1) in the range of the rotary movement of the overlapping part (72) of the screw cap (7a).

13. Coupling device according to one of the claims 11 or 12, characterised thereby, that the cap bottom with secured screw cap (7a) on the one hand displays a relief groove in the thread for the reception of a sealing ring (103) and on the other hand is provided in the entry region of the plug (5 or 6) with an annular recess for the reception of a sealing ring (101).

**Revendications**

1. Dispositif de couplage pour des fibres optiques serrées dans un connecteur avec un corps de serrage en forme de douille, fendu longitudinalement et transversalement, et avec un boîtier enveloppant le corps de serrage, caractérisé en ce que le corps de serrage (2) dans la zone de la fente longitudinale (21) est muni de prolongements (23, 24) parallèles, dont l'écart qui les sépare correspond à la largeur de la fente longitudinale, qu'un (24) des prolongements est divisé par la fente transversale, que le boîtier (1) présente une cavité (14) sur toute sa longueur correspondant au contour du corps de serrage, la cavité possédant au moins dans la zone du prolongement divisé un évidement (15) débouchant dans la cavité et correspondant à la longueur de la cavité, pour recevoir des corps de pression (83, 84, 85), qui peuvent être pressés contre le corps de serrage par la rotation des chapeaux à vis (7, 7a) se trouvant aux extrémités du corps de serrage.

2. Dispositif de couplage selon la revendication 1, caractérisé en ce que le boîtier (1) dans la zone médiane possède à l'extérieur une bride (12), éventuellement munie de perforations, et présente à l'intérieur un séparateur (13) qui sépare l'évidement (15) en son milieu.

3. Dispositif de couplage selon une des revendications 1 ou 2, caractérisé en ce qu'au moins une partie de l'évidement (15) est remplie avec les corps de pression (83, 84, 85) qui peuvent être pressés contre les fibres optiques (3, 4) enserrées au moyen de dispositifs de transmission de force disposés entre les chapeaux à vis (7) et les corps de pression.

4. Dispositif de couplage selon une des revendications 1 à 3, caractérisé en ce que les dispositifs de transmission de force sont constitués par des poussoirs (81) faisant saillie dans les évidements (15) et, le cas échéant, par des disques de pression (82) disposés au fond des chapeaux.

5. Dispositif de couplage selon une des revendications 1 à 4, caractérisé en ce que les corps de pression sont des billes (83) dont le diamètre est inférieur à la plus grande dimension dans la hauteur de l'évidement.

6. Dispositif de couplage selon une des revendications 1 à 4, caractérisé en ce que les corps de pression sont réalisés avec des sections en forme de trapèze (84) ou de triangle (85), et sont disposés dans l'évidement (15) de façon que les surfaces de corps de pression adjacents, inclinées par rapport à la surface de la base soient en contact positif entre elles.

7. Dispositif de couplage selon une des revendications 1 à 6, caractérisé en ce que la fente longitudinale (21) du corps de serrage (2) est disposée centralement par rapport à l'alésage prévu pour recevoir les extrémités des fibres optiques (5, 6).

8. Dispositif de couplage selon une des revendications 1 à 6, caractérisé en ce que la fente longitudinale (21a) du corps de serrage (2a) est excentrée par rapport à l'alésage prévu pour recevoir les extrémités des fibres optiques (5, 6).

9. Dispositif de couplage selon une des revendications 1 à 8, caractérisé en ce que le boîtier (1) et le corps de serrage (2) sont fixés l'un à l'autre par des vis ou de la colle.

10. Dispositif de couplage selon une des revendications 1 à 4, caractérisé en ce que chaque capot à vis (7) est constitué d'un cylindre de révolution avec un filetage intérieur, le cylindre étant fermé par un fond de chapeau, et qu'une rondelle d'étanchéité (102) est prévue pour être placée entre l'extrémité ouverte et la bride (12) du corps de serrage (2).

11. Dispositif de couplage selon une des revendications 1 à 4, caractérisé en ce que chaque chapeau à vis (7a) est réalisé en une pièce de forme cylindrique avec un filetage interne (71) adapté au filetage externe (11) du boîtier (1), que la pièce de forme cylindrique est fermée par un fond de chapeau, et que la pièce de forme cylindrique présente vers l'ouverture une partie en saillie (72) sur environ 90°.

12. Dispositif de couplage selon la revendication 11, caractérisé en ce que sur la surface extérieure du boîtier (1), dans la zone du déplacement en rotation de la partie en saillie (72) du chapeau à vis (7a) sont formés des trous (16) dans lesquels on peut engager des chevilles (9) pour limiter la rotation et rendre le chapeau imperdable.

13. Dispositif de couplage selon une des revendications 11 ou 12, caractérisé en ce que le fond du chapeau d'un chapeau à vis de sûreté (7a) présente d'une part un segment sans filetage pour recevoir une rondelle d'étanchéité (103) et d'autre part, est muni dans la zone d'introduction de l'extrémité de la fibre (5, 6) d'un suralésage pour recevoir une rondelle d'étanchéité (101).

FIG. 1

FIG. 2

FIG. 3

FIG. 4

FIG. 5

FIG. 6

FIG. 7

FIG. 8

## FIG. 9

## FIG. 10